# EUROPEAN PATENT APPLICATION

(11) **EP 2 251 106 A1**
(43) Date of publication of application: **17.11.2010**
(21) Application number: 09305421.1
(22) Date of filing: 12.05.2009
(51) Int. Cl.: B09C 1/00, B09C 1/10

(54) **Use of cistus libanotis to clean heavy metals containing soil**

(71) Applicant: Institut de Recherche pour le Développement ( IRD), 13002 Marseille 2 (FR); Université Mohammed V - Agdal - Maroc (Faculté des sciences de Rabat), Rabat-Chellah Rabart (MA); Université Abdelmalek Essaâdi (Faculté des Sciences de Tétouan), Martil (MA); Centre National de l'Energie, des Sciences et des Techniques Nucléaires (CNESTEN), 10001 Rabat (MA); I.N.R.A. Institut National de la Recherche Agronomique, 75338 Paris (FR)
(72) Inventor: Laplaze, Laurent, 34170, Castelnau-le-Lez (FR); Doumas, Patrick, 34080, Montpellier (FR); Smouni, Abdelaziz, 10000, Rabat (MA); Brhada, Fatiha, 10100, Rabat (MA); Ater, Mohamed, 93002, Tetouan (MA)
(74) Representative: Cabinet Plasseraud

(57) **Abstract**

The present invention relates to the use of *Cistus libanotis* for lead phytoremediation.

## Description

### Field of the invention

The present invention relates to a method of cleaning heavy metals-containing soil (phytoremediation) using the lead-hyperaccumulator plant *Cistus libanotis*.

### Background of the invention

Environmental contamination of soils, water or atmosphere is one of the main current problems.

Lead is widely used in the industrial field and is highly toxic. Lead extraction and treatment provide heavy metal containing residues, which are generally not removed. Those wastes have increased the concentration of toxic metals in the environment and may thus be responsible for health and environmental issues. The removal of those residues and their treatment are too expensive to be practical.

Soil contamination by heavy material is thus of great worldwide concern. Sources of metals in the environment originate from both natural geochemical processes and human activities (such as metal smelting industry, residues from metalliferous mining, combustion of fossil fuel, and agricultural use of pesticides, fertilisers and sewage sludges). Unlike organic pollutants, metals do not biodegrade and are generally not mobile; therefore their residence time in the soils is thousands of years. Currently used clean-up strategies involve civil engineering practices (capping, excavation, soil washing, thermal treatment, chemical treatment) and are very expensive and destructive (destroying soil structure, fertility and productivity).

The development of alternative, economically active, remediation technologies is hence of interest.

Plants require at least 17 elements to complete their life cycles, including the heavy metals Cu, Zn, and Ni. Plants also accumulate nonessential metals, such as Pb, when they are present in the environment.

In recent years, a method for removing heavy metals in the environment by growing a plant that absorbs and accumulates heavy metals in soil contaminated with heavy metals and harvesting and removing plant has attracted attention as a novel technique for cleaning up soil contamination.

There are at least 400 known metal hyper-accumulator in the world; however, a limited number of these are lead hyper-accumulator.

The following plants are for example known for their use in lead phytoextraction: *Brassica juncea*, *Brassica napus*, *Helianthus annuus*, *Thlaspi caerulescens or Fagopyrum esculentem.*

For example, US 5,364,451 discloses the use of plants from the Brassicaceae family in a process for removal of metal ions such as lead and chromium from soils.

However, some lead-hyperaccumulator plants, such as *Thalspi rotundifolium*, have small biomass and a slow growth rate, which make them unsuitable for phytoremediation. In addition, plants such as Brassicacea are annual plants and thus are not perennial.

Thus, there is a need for an alternative method for lead specific-phytoremediation.

The inventors found out that plant, *Cistus libanotis*, a specific specie of the Cistaceae family, has the high ability to specifically accumulate lead. *Cistus libanotis* presents the great advantage of being perennial.

### Summary of the invention

One object of the invention is the use of *Cistus libanotis* for lead phytoremediation.

In one embodiment, *Cistus libanotis* is used for lead phytoextraction. In another embodiment, *Cistus libanotis* is used for lead phytostabilisation.

Another embodiment is a phytoremediation method comprising absorbing heavy metals contained in a contaminated soil by using a metal-hyperaccumulator plant to clean the soil, wherein the heavy metal is lead and the metal-hyperaccumulator plant is *Cistus libanotis*.

In one embodiment of the invention, the lead content in the heavy metal containing soil is higher that 50 mg/kg.

In one embodiment of the invention, said plant is harvested and incinerated.

In another embodiment of the invention, the ashes obtained by incineration of said plant are treated by vitrification with a plasma arc.

### Detailed description of the invention

The inventors found out that *Cistus libanotis*, a specific species of the Cistaceae family, has the high ability to specifically accumulate lead.

Cistus (Cistaceae) is one of the most characteristic genera of the Mediterranean flora. The adaptation of the genus to Mediterranean environments is evident from ecological characteristics such as fire-dependent seed germination (Roy and Soinié, 1992; Tyrabaud and Renard, 1999), insect-dependent pollination (Talavera et al., 1993), flower-dependent reproduction (Herrera, 197) and spring-dependent phenology (Herrera, 1986). Thus, *Cistus libanotis* is well-adapted to dry climate.

*Cistus libanotis* is a perennial and does not need to be planted every year. In addition, *Cistus libanotis* is grows rapidly even when cultivated in an unproductive soil.

Besides, a great interest in using *Cistus libanotis* is that it has little chance to enter the food chain since the plant is usually not ingested by animals.

The success of phytoremediation, in general, is dependent on several factors:
First, the plants must produce sufficient biomass while accumulating high concentration of metal.
Second, the metal accumulating plants need to be responsive to agricultural practices that allow repeated planting and harvesting of the metal rich tissue.

It therefore appeared that *Cistus libanotis* exhibits potential capacity to be used in phytostabilization procedures and is capable of reducing the risks of metal mobility and finally to decrease subsequent environmental degradation.

The use of *Cistus libanotis* in the cleaning of heavy metals-containing soil hence provides a consequent economic and environmental advantage.

One object of the invention is the use of *Cistus libanotis* for lead phytoremediation.

As used herein, the term "phytoremediation" refers to the treatment of environmental problems through the use of plants. Phytoremediation consists in depolluting contaminated soils, water or air with plants able to contain, degrade or eliminate metals, pesticides, solvents, explosives, crude oil and its derivatives, and various other contaminants, from the mediums that contain them.

Various phytoremediation processes are known:
Phytoextraction refers to a process wherein the plant absorbs contaminants through the root system and stores them in the root biomass and/or transport them up into the stems and/or leaves.
Phytostabilisation refers to a process wherein the plant is used to sequester contaminants so that pollutants become less available and livestock, wildlife, and human exposure is reduced.
Phytotransformation: refers to a process wherein the contaminant is modified by the plant metabolism. The pollutant is thus rendered non-toxic.
Phytostimulation refers a process, wherein the soil microbial activity is enhanced for the degradation of contaminants.
Phytovolatilisation refers to a process; wherein the substances are removed from soil or water and released into air.
Rhizofiltration refers to a process, wherein, water is filtrated through a mass of roots to remove toxic substances.

In one embodiment of the invention, *Cistus libanotis* can be used for phytoextraction of lead.

In another embodiment of the invention, *Cistus libanotis* can be used for lead phytostabilisation. This embodiment is of great interest as it prevents lead particle volatilization and thus prevents exposure of animals and human to lead.

In another embodiment of the invention, *Cistus libanotis* can be used for lead rhizofiltration.

As used herein, the term "contaminated soils" refers to a soil wherein lead is present exceeding an environmental standard value prescribed by a law and exceeding a value considered to impact on human health. Lead-contaminated soils thus refer to soil comprising more than 50 mg/kg of lead. Concentration of lead in a soil sample is determined by physico-chemical techniques such as mass spectrometry.

The contaminated soils to which the invention can be applied include not only a soil of all lands where a plant can be cultivated such as industrial lands, agricultural lands, house lands, moutains and forest and the like, but also any medium where a plant can be cultivated by suitable treatment such as slime, sludge and the like.

The background concentration of lead in *Cistus libanotis* is about 10 mg/kg; therefore the hyper-accumulation of lead is determined when the lead concentration is higher than 1000 mg/kg.

The invention is directed to a method for removing lead from contaminated soil using *Cistus libanotis*.

Another object of the invention is a phytoremediation method comprising absorbing heavy metals contained in a contaminated soil by using a metal-hyperaccumulator plant to clean the soil, wherein the heavy metal is lead and the metal hyperaccumulator plant is *Cistus libanotis*.

This method reduces the amount of lead in the soils and reduces dissemination of the contaminating agent through wind and water.

This invention relates to a soil cleaning method of absorbing lead into *Cistus libanotis* which has been seeded or planted and, thereafter, recovering lead by harvesting *Cistus libanotis* and performing post treatment.

For example, *Cistus libanotis* can be seeded directly in the soil or seeded and germinated in another place and planted as a plantlet.

Then, when required, *Cistus libanotis* plants are harvested then incinerated. For example, *Cistus libanotis* may be harvested every 3 to 5 years. The resulting ashes, which contain lead, are then treated so that they can be used in the production of new metals.

The treatment of those ashes may be done by vitrification with plasma arc, as it is described in US 6,532,768, which is directed to a process designed to render inert by vitrification any type of solid waste or residue containing, for example heavy metals, such as lead.

The present invention can be utilized in cleaning out not only a lead-contaminated soil but also lead contamination of any medium where a plant can be cultivated, such as contaminated water and the like.

In another embodiment of the invention, a biodegradable chelating agent can be added to a soil during cultivation of *Cistus libanotis*, in order to improve absorption of lead by *Cistus libanotis*. Examples of such biodegradable chelating agent is methylglycine diacetate (MGDA), ethylene succinic acid (EDTS), L-glutamic acid diacetate (GLDA), L-aspartic acid diacetate (ASDA) and/or a salt thereof.

As ethylenediamine tetraacetic acid (EDTA) which has been previously known to have the high lead dissolving ability is nondegradable, it remains in a soil, and may cause secondary environmental contaminant. Therefore, the EDTA is not preferable.

A concentration of the biodegradable chelating agent is added to be different depending on a concentration of heavy metals in a soil, a nature of a soil, types of the biodegradable chelating agent, the ability of the biodegradable chelating agent to dissolve out heavy metals in a soil, and an addition method and timing of the biodegradable chelating agent, and may be 0.01 to 100 mmol/kg.

The biodegradable chelating agent can be added to a soil by a method of spraying or sprinkling granules, powder or an aqueous solution directly to a soil. However, depending on a concentration of the aqueous solution, the aqueous solution can be added to a soil by a method without directly contact with *Cistus libanotis.*

In addition, as a timing for adding the biodegradable chelating agent to a soil, the biodegradable chelating agent can be added to a contaminated soil before seeding, and/or can be added for a predetermined time after seeding. Depending on an addition amount, the biodegradable chelating agent may be added so that the chelating agent is present in a soil only for a predetermined time before harvesting *Cistus libanotis*.

### EXAMPLES

In order to identify plants tolerant to lead, we did a survey of plant species growing on two mining sites (Touissit & Boubker) and one industrial site (smelting work, Oued El Heimer) contaminated with lead in Morocco and a control site in a nearby area. The area chosen for this study is located in the east of Morocco near Oujda.

25 soil and 67 plant samples were collected on these sites. 15 water samples were also collected on the different sites. Plant samples were washed with distilled water to remove any surface contamination. Soil samples correspond to the top 15 cm of soil. Plant and soil samples were oven-dried at 70°C for 48h prior to analysis. Total heavy metals were extracted by nitric acid-perchloric acid digestion. Metal contents were measured by Inductively Coupled Plasma-Mass Spectrometry (ICP-MS).

**Table I. Concentration of heavy metals in the soil samples (mg.kg⁻¹). Contamination threshold for Pb is 50mg.kg⁻¹.**

| **Sample** | **Al** | **As** | **Cd** | **Cu** | **Ni** | **Pb** | **Zn** |
|---|---|---|---|---|---|---|---|
| **Control** | 26388.6 | ≤0.36 | ≤0.03 | 6.49 | 20.61 | 24.00 | 9.18 |
| **Oued El Heimer** | | | | | | | |
| **Station 2** | 8505.27 | 6.62 | 8.93 | 9.77 | 0.48 | 724.97 | 95.92 |
| **Station 4** | 1487.31 | 10.33 | 0.52 | 0.36 | ≤0.1 | 26.38 | 527.52 |

**Table II. Concentration of heavy metals in Cistus libanotis plants from Oued El Heimer (mg.kg⁻¹)**

| **Sample** | **Al** | **As** | **Cd** | **Cu** | **Ni** | **Pb** | **Zn** |
|---|---|---|---|---|---|---|---|
| **Plant 1 (Station 2)** | 540.88 | 11.39 | 9.65 | 13.51 | 0.78 | 1820.80 | 89.01 |
| **Plant 2 (Station 4)** | 371.93 | 7.94 | 6.91 | 12.38 | 0.97 | 923.03 | 1297.06 |

The analysis of soil samples (Table I) showed that they contained a high concentration of lead particularly in Station 2 (Oued El Heimer). Plants including C. *libanotis* growing in these conditions were therefore tolerant to lead. Moreover, we found that C. *libanotis* plants accumulated lead in their aerial tissues (Table II) at concentration above the threshold defining lead hyperaccumulator plants (>1000 mg/kg). Maximum Pb concentration was observed in plants growing in soils containing the highest level of Pb available thus showing that the concentration of lead is affected by the soil. However, even the plant growing in a soil containing little Pb (Station 2) was able to accumulate it at a high concentration.

## Claims

1. Use of *Cistus libanotis* for lead phytoremediation.

2. The use according to claim **1,** for lead phytoextraction.

3. The use according to claim **1,** for lead phytostabilisation.

4. A phytoremediation method comprising absorbing heavy metals contained in a contaminated soil by using a metal-hyperaccumulator plant to clean the soil, wherein the heavy metal is lead and the metal-hyperaccumulator plant is *Cistus libanotis*.

5. The method according to claim **4,** wherein the lead content in the heavy metal containing soil is higher that 50 mg/kg.

6. The method according to claim **4** or **5,** wherein said plant is harvested and incinerated.

7. The method according to claim **6,** wherein the ashes obtained by the incineration are treated by vitrification with a plasma arc.
